# EUROPÄISCHE PATENTANMELDUNG

(11) **EP 1 921 567 A2**
(43) Veröffentlichungstag der Anmeldung: **14.05.2008**
(21) Anmeldenummer: 07021756.7
(22) Anmeldetag: 09.11.2007
(51) Int. Cl.: G06K 9/00, B60R 1/08, G06T 5/50

(54) **Verfahren zur bildhaften Darstellung einer Fahrzeugumgebung und Bilderfassungssystem**

(30) Priorität: 10.11.2006 DE 102006053109
(71) Anmelder: AUDI AG, 85045 Ingolstadt (DE)
(72) Erfinder: Hallitschke, Frank, 93336 Altmannstein (DE); Riedel, Helmut, 86697 Oberhausen (DE)
(74) Vertreter: Thielmann, Frank

(57) **Zusammenfassung**

Die vorliegende Erfindung betrifft ein Verfahren zur bildhaften Darstellung einer Fahrzeugumgebung, bei welchem mit einer im sichtbaren Spektralbereich sensitiven ersten Detektionseinrichtung (4a) ein erster Fahrzeugumgebungsbereich (5) erfasst und mehrfarbig dargestellt wird, und ein zweiter Fahrzeugumgebungsbereich (6) mit einer im infraroten Spektralbereich sensitiven zweiten Detektionseinrichtung (4b, 4c, 4d) erfasst wird, wobei sich der zweite Fahrzeugumgebungsbereich (6) bereichsweise mit dem ersten Fahrzeugumgebungsbereich (5) überlappt und sich in zumindest einem Teilbereich (8) über die Reichweite des ersten Fahrzeugumgebungsbereichs (5) hinaus erstreckt, und die in dem Teilbereich (8) durch die zweite Detektionseinrichtung (4b, 4c, 4d) mittels Infrarotbilder erfasste Fahrzeugumgebung mehrfarbig angezeigt wird. Die Erfindung betrifft auch ein Bilderfassungssystem, insbesondere ein Nachtsichtsystem, für ein Fahrzeug.

## Beschreibung

Die Erfindung betrifft ein Verfahren zur bildhaften Darstellung einer Fahrzeugumgebung, bei welchem mit einer im sichtbaren Spektralbereich sensitiven ersten Detektionseinrichtung ein erster Fahrzeugumgebungsbereich erfasst und mehrfarbig dargestellt wird, und ein zweiter Fahrzeugumgebungsbereich mit einer im infraroten Spektralbereich sensitiven zweiten Detektionseinrichtung erfasst wird. Des Weiteren betrifft die Erfindung ein Bilderfassungssystem, insbesondere ein Nachtsichtsystem, für ein Fahrzeug.

Bilderfassungssysteme zur Erfassung der Umgebung eines Fahrzeugs sind bekannt. Aus der DE 103 04 703 A1 ist ein Verfahren und eine Vorrichtung zur Sichtbarmachung der Umgebung eines Fahrzeugs mit umgebungsabhängiger Fusion eines Infrarot- und eines Visuell-Abbilds bekannt. Insbesondere soll die Sichtbarmachung der Umgebung bei Dunkelheit des Fahrzeugs erfolgen. Dazu wird eine gewichtete Überlagerung zeit- und ortsgleicher Bildpaare aus einem Visuell-Abbild und einem Infrarot-Abbild zur Bildung eines Fusionsbilds vorgeschlagen. Die Gewichtung kann umgebungsabhängig erfolgen. So kann beispielsweise bei Dunkelheit eine höhere Gewichtung und damit Hervorhebung der infraroten Information gegenüber der visuellen Information im Fusionsbild vorgesehen sein. Zeit- und ortsgleiche Bildpaare werden pixel- oder bereichsweise überlagert und/oder Mittelwerte gebildet. Bei dem bekannten Verfahren und der bekannten Vorrichtung erfolgt lediglich eine Sichtbarmachung einer Kombination beziehungsweise Überlagerung eines visuellen Abbilds und eines infraroten Abbilds eines weitgehend selben Ausschnitts der Umgebung eines Fahrzeugs.

Darüber hinaus ist aus der DE 102 18 175 A1 ein Verfahren und eine Vorrichtung bekannt, bei der ebenfalls eine Sichtbarmachung der im Wesentlichen gleichen Umgebung eines Fahrzeugs mit fahrsituationsabhängiger Fusion eines Infrarot- und eines Visuell-Abbilds erfolgt. Abhängig von einer Fahrzeug-Geschwindigkeit, eines Betriebs eines Abblend- beziehungsweise Fernlichts etc. wird ein farbiges visuelles Abbild mit dem Infrarot-Abbild fusioniert beziehungsweise kombiniert oder überlagert.

Ferner ist aus der DE 103 48 109 A1 ein Verfahren und eine Vorrichtung zur Sichtbarmachung einer Fahrzeugumgebung bekannt, bei der ebenfalls eine Fusion zwischen einem visuellen Abbild und einem von dem gleichen Umgebungsbereich gemachten infraroten Abbild erfolgt. In der Fahrzeugumgebung detektierte Objekte werden im Hinblick auf ihre kontrastverbessernde bildhafte Darstellung mit Wichtungsfaktoren gewichtet. Die Gewichtung kann objektspezifisch erfolgen, wobei die Objektbewertung durch Objekterkennungssysteme, die mit einer Objektklassifizierung arbeiten, erfolgt.

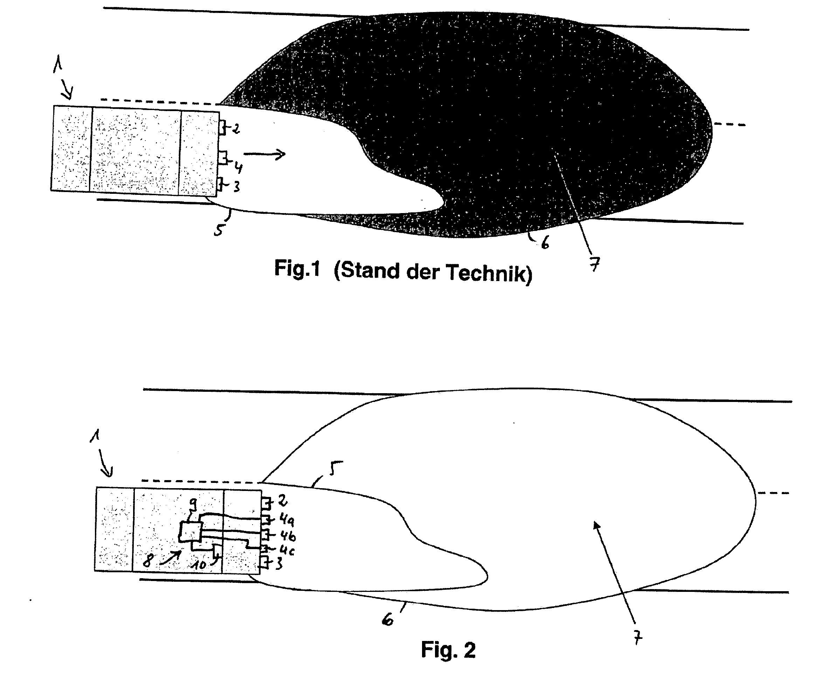

Da das von IR(infrarot)-Sensoren erfasste Bild keine mehrfarbige Farbinformation bei Nacht umfasst, kann das Bild der Umgebung nur einfarbig ausgegeben werden. In Fig. 1 ist in schematischer Weise eine Situation gezeigt, in der sich ein Fahrzeug 1 mit Frontscheinwerfern 2 und 3 in Richtung des Pfeils fortbewegt. Das Fahrzeug 1 umfasst eine IR-Sensorik 4, welche zur Objekterfassung im infraroten Spektralbereich im Vorfeld des Fahrzeugs 1 ausgebildet ist. Der Fahrer des Fahrzeugs 1 kann Objekte innerhalb des durch die Frontscheinwerfer 2 und 3 ausgeleuchteten Fahrzeugumgebungsbereichs 5 auch in deren Farbgebung im Wesentlichen erkennen. Der von der IR-Sensorik 4 abgetastete Fahrzeugumgebungsbereich 6 weist jedoch eine wesentlich größere Reichweite als der ausgeleuchtete Fahrzeugumgebungsbereich 5 auf. Insbesondere bei Dunkelheit oder schlechten Sichtverhältnissen kann der Fahrer in dem Teilbereich 7, welcher sich über den Fahrzeugumgebungsbereich 5 hinaus erstreckt und innerhalb des Fahrzeugumgebungsbereichs 6 liegt, nichts mehr erkennen. Da jedoch die IR-Sensorik 4 lediglich einfarbige Bilddarstellungen ermöglicht, welche typischerweise Graustufenbilder oder gründlich abgestufte Bilder sind, ist die Bilddarstellung aufgrund fehlender Farbinformation und unrealistischen Farbdarstellungen unrealistisch wiedergegeben und die Beobachtung der angezeigten Bilder durch einen Fahrer im Fahrzeug schwierig. Das Abbild der Umgebung, insbesondere dieses Teilbereichs 7 wirkt dadurch fremd und ermüdet den Fahrer bei längerer Betrachtung.

Aus der WO 03/107067 A2 ist ein Verfahren bekannt, bei dem die vordere Umgebung des Fahrzeugs mittels Infrarot und zusätzlich mittels einer herkömmlichen Farbkamera aufgenommen wird. Die aufgenommen Sequenzen werden mittels eines Algorithmus fusioniert. Dabei ist es möglich, die unmittelbar vom Scheinwerfer ausgeleuchtete Umgebung mehrfarbig auszugeben. Die von den Infrarotsensoren erfasste Umgebung wird aber weiterhin lediglich als Graustufenbild oder als grün abgestuftes Bild und somit im Kontext der vorliegenden Anmeldung als nicht farbig, ausgegeben.

Ein Nachteil eines Gesamtbildes eines Umgebungsbereichs mit farbigen und grauen Darstellungsbereichen ist darin gegeben, dass es den Fahrer eher überfordert als entlastet.

Im militärischen Bereich ist es darüber hinaus bekannt, mittels geeigneter Algorithmen, die mittels Infrarot-Nachtsichtgeräten bei Nacht erfasste Umgebung in farbige Nachtbilder umzurechnen. Nachteilig bei diesem System ist, dass zur Errechnung des farbigen Nachtbildes eine Aufnahme der beobachteten Umgebung beziehungsweise einer ähnlichen Umgebung bei Tag durchgeführt werden muss. Dieses Verfahren ist deshalb in Fahrzeugen nicht anwendbar.

Daher ist es Aufgabe der vorliegenden Erfindung, ein Verfahren und ein Bilderfassungssystem zu schaffen, mit dem die bildhafte Darstellung einer Fahrzeugumgebung für einen Fahrzeugnutzer verbessert werden kann. Insbesondere bei Dunkelheit oder schlechten Sichtverhältnissen soll diese bildhafte Darstellung realitätsnäher erfolgen.

Diese Aufgabe wird durch ein Verfahren, welches die Merkmale nach Patenanspruch 1 aufweist, und ein Bilderfassungssystem, welches die Merkmale nach Patentanspruch 14 aufweist, gelöst.

Bei einem erfindungsgemäßen Verfahren zur bildhaften Darstellung der Fahrzeugumgebung wird mit einer im sichtbaren Spektralbereich sensitiven ersten Detektionseinrichtung ein erster Fahrzeugumgebungsbereich erfasst und mehrfarbig dargestellt. Ein zweiter Fahrzeugumgebungsbereich wird mit einer im infraroten Spektralbereich sensitiven zweiten Detektionseinrichtung erfasst. Der zweite Fahrzeugumgebungsbereich überlappt bereichsweise mit dem ersten Fahrzeugumgebungsbereich und erstreckt sich in zumindest einem Teilbereich in einer Richtung über die Reichweite des ersten Fahrzeugumgebungsbereichs hinaus. Die in diesem Teilbereich durch die zweite Detektionseinrichtung mittels Infrarotbilder erfasste Fahrzeugumgebung wird für einen Fahrzeugnutzer mehrfarbig angezeigt. Unter einer mehrfarbigen Anzeige wird die Anzeige in verschiedenen Farbtönen und somit möglichst realitätsnah verstanden. Unter einer mehrfarbigen Darstellung wird jedoch nicht ein Graustufenbild mit verschiedenen Grautönen oder eine sonstige in einer Farbe dargestellte Bildanzeige mit verschiedenen Farbstufen dieses einen Farbtons verstanden.

Auch die prinzipiell nur unifarben darstellbaren Infrarotbilder der zweiten Detektionseinrichtung werden durch die Erfindung so umgewandelt, dass eine mehrfarbige Darstellung ermöglicht werden kann. Das gesamte Abbild der detektierten Fahrzeugumgebung ist dadurch realistischer, wodurch die Aufmerksamkeit eines Beobachters dieser dargestellten Bilder erhöht beziehungsweise länger aufrechterhalten werden kann.

Insbesondere bei Nachtfahrten kann somit eine erhebliche Verbesserung der erfassten Umgebungsdarstellung erreicht werden. Die mit einer wesentlich höheren Reichweite ausgestalteten zweiten Detektionseinrichtungen erfassen dann eine vom Fahrzeugnutzer nicht erkennbare Umgebung, die jedoch auch dann realitätsnah in entsprechender Vielfarbdarstellung angezeigt werden kann.

Bevorzugt wird aus Farbinformationen von gespeicherten und/oder detektierten Referenzdaten eine oder mehrere Farbinformationen für die in dem Teilbereich mittels Infrarotbildern detektierten Objekten erzeugt. Durch eine entsprechende Bildverarbeitung können somit aus einer Vielzahl von bekannten und zugrunde gelegten Referenzdaten, welche vorab gespeichert und/oder situationsabhängig detektiert werden können, Farbinformationen für verschiedenste Objekte in dem Teilbereich detektiert werden. Aus bekannten Vergleichsinformationen kann dadurch auf die Farbinformation der Objekte in dem Teilbereich geschlossen werden. Dadurch kann eine relativ zuverlässige und beliebig präzisierbare Informationsbasis bereitgestellt werden, welche zu sehr präzisen Farbinformationen für die in dem Teilbereich erfassten Objekte führt.

Bevorzugt werden zumindest in dem Teilbereich erfasste Objekte mit abgespeicherten Referenzobjekten verglichen und abhängig von dem Vergleich vorgegebenen Objektklassen zugeordnet. Anhand verschiedener Objektklassen, welche beispielsweise Personen, Tiere, Hindernisse, andere Fahrzeuge, Bäume und dergleichen umfassen können, kann eine besonders schnelle und zuverlässige Einstufung der jeweils erfassten Objekte in dem Teilbereich vorgenommen werden. Durch diese Klassifizierung können gleiche oder relativ ähnliche Objekte zusammengefasst werden und eine relativ schnelle und aufwandsarme Farbinformationszuordnung erfolgen. Durch diese Vorgehensweise kann sehr schnell eine Farbgebung für ein erfasstes Objekt in dem Teilbereich ermöglicht werden.

Bevorzugt werden Farbinformationen einer Objektklasse auf ein darin klassifiziertes Objekt des Teilbereichs übertragen. Es kann vorgesehen sein, dass alle einer Objektklasse zugeordneten Objekte mit einer im Wesentlichen gleichen Farbgebung oder einer im Wesentlichen gleichen Farbgebung mit mehreren Farbtönen erfolgt. So kann beispielsweise vorgesehen sein, dass Bäume und Sträucher allesamt in eine Objektklasse kategorisiert werden und Stämme und Äste mit einem gleichen bräunlichen Farbton sowie Blätter und Baumnadeln mit einem gleichen grünlichen Farbton dargestellt werden. Durch diese erste näherungsweise Farbtongebung der Objekte kann bereits eine relativ realitätsnahe farbgebende Darstellung erfolgen. Darüber hinaus kann dies durch einen geringen Verarbeitungsaufwand durchgeführt werden.

Bevorzugt werden Farbinformationen eines spezifischen Referenzobjekts auf einem Teilbereich mittels Infrarotbildern erfassten Objekts im Falle einer Objektübereinstimmung übertragen. Durch diese Vorgehensweise wird eine sehr spezifizierte und hoch präzise Farbinformationsanalyse durchgeführt. Objektindividuell werden dann bei Objektübereinstimmung oder Objektübereinstimmung mit hoher Wahrscheinlich aus den Farbinformationen des Referenzobjekts Farbinformationen für die durch Infrarotbilder erfassten Objekte erzeugt. Die Farbechtheit und realitätsnahe Bilddarstellung kann dadurch nochmals wesentlich erhöht werden.

Aus Farbinformationen von in dem ersten Fahrzeugumgebungsbereich mehrfarbig erfassten Objekten wird bevorzugt auf Farbgebungen von in dem Teilbereich erfassten Objekten extrapoliert. Dafür können bevorzugt entsprechende Bildverarbeitungsverfahren zugrunde gelegt werden. Mit begrenztem Rechenaufwand und somit auch begrenztem Zeitaufwand kann dadurch eine sehr genaue und zutreffende Farbdarstellung für ein oder mehrere Objekte des Teilbereichs erfolgen.

Durch mathematische Modelle und Rechenabläufe, welche bevorzugt dieser Extrapolation zugrunde gelegt werden, kann auch ohne sonstige Referenzobjekte oder Referenzdaten eine Farbgebung der Objekte erreicht werden.

Bevorzugt werden in dem ersten Fahrzeugumgebungsbereich erfasste Objekte mit in diesem spezifizierten Teilbereich der zweiten Detektionseinrichtung erfassten Objekten verglichen und bei einer Objektübereinstimmung Farbinformationen entsprechend auf die Objekte des Teilbereichs übertragen. Dadurch kann aufgrund der momentan örtlichen Gegebenheiten, in denen sich das Fahrzeug bewegt, von bereits farblich erfassten Objekten auf in einem begrenzten Bereich, und somit benachbart dazu angeordnete Objekte in dem Teilbereich im Hinblick auf deren Farbgebung geschlossen werden. So kann beispielsweise ein im ersten Fahrzeugumgebungsbereich mehrfarbig detektierter Baum im Hinblick auf seine Farbgebung erkannt werden und ein beabstandet dazu in dem Teilbereich angeordneter weiterer Baum mit einer entsprechenden Farbgebung angezeigt werden. Da dafür die Wahrscheinlichkeit relativ hoch ist, da in einem derartig regional begrenzten Bereich eine zumindest sehr ähnliche Farbgebung entsprechender Objekte gegeben ist, kann dadurch auch eine sehr realitätsnahe Mehrfarbdarstellung der Objekte in dem Teilbereich gewährleistet werden und dies relativ aufwandsarm ermöglicht werden.

Zur Erzeugung von Farbinformationen für Objekte in der Fahrzeugumgebung, insbesondere in dem Teilbereich, werden bevorzugt Informationen eines Satelliten-Navigationssystems und/oder Informationen von digitalen Landkarten berücksichtigt. Die präzise Objekterfassung und auch gegebenenfalls individuell vorherrschende Bedingungen im Hinblick auf die farbliche Ausgestaltung der Objekte können dadurch berücksichtigt werden. So können GPS (Global Positioning System)-Daten und digitales Kartenmaterial zur Umgebungserfassung berücksichtigt werden. So können auch Bäume, Gebäude, Flussläufe und dergleichen erkannt werden. Im Hinblick auf die Zuordnung der Farbgebung von Objekten in dem Teilbereich kann diese Informationsberücksichtigung eine verbesserte Bilddarstellung gewährleisten.

Auch Wetterinformationen wie Regen, Nebel, Schnee, Eis oder dergleichen als auch Jahreszeiteninformationen können als Basisdaten verwendet werden, um auf die Farbinformation der Objekte in dem Teilbereich zu schließen oder diese zu extrapolieren.

Darüber hinaus ist es bevorzugt vorgesehen, dass auch neben diesen so genannten Car-to-Infrastructure auch so genannte Car-to-Car-Kommunikationstechniken zugrunde gelegt werden können. So können zur Erzeugung von Farbinformationen für ein Objekt in der Fahrzeugumgebung, insbesondere im Teilbereich, von diesem Objekt gesendete und dieses Objekt spezifizierende Informationen berücksichtigt werden. So kann bei einer Car-to-Car-Kommunikation auch eine Information über das in dem Teilbereich befindliche Objekt empfangen werden. Ist dieses Objekt beispielsweise ein weiteres Fahrzeug, welches sich nähert, so kann beispielsweise eine Information über das Fahrzeugmodell, die Fahrzeugfarbe und dergleichen übermittelt werden. Auch dadurch kann eine erhebliche Verbesserung in der farbgebenden realitätsnahen Darstellung dieses Objekts erfolgen.

Es kann auch vorgesehen sein, dass Farbinformationen für die Fahrzeugumgebung im Teilbereich durch statistische Modelle generiert werden. So können beispielsweise für Hintergrundobjekte wie Himmel, Wolken, Wälder und dergleichen durch derartige statistische Methoden sehr realitätsnahe Farbinformationen generiert werden. So kann bei der Umgebungserfassung ein relativ unrelevanter Umgebungsbereich, wie beispielsweise der Himmel oder Wolken, dennoch sehr realitätsnah eingefärbt werden.

Es kann vorgesehen sein, dass zum Abgleich der Farbechtheit bei der Darstellung der Farbinformationen für die Fahrzeugumgebung im Teilbereich abgespeicherte Referenzfarbwerte herangezogen werden. Dazu können beispielsweise Datenbankinformationen berücksichtigt werden, die entsprechend abgelegt sind.

Darüber hinaus kann vorgesehen sein, dass ein integriertes Navigationssystem im Hinblick auf die Objekterfassung genutzt wird, um beispielsweise bei einem längeren Ausfall von GPS-Systemen ein Überbrücken dieses Informationsverlustes ermöglichen zu können. So kann dann beispielsweise eine Ortsbestimmung anhand der letzten Position, dem zurückgelegten Weg, einem Winkel und digitalem Kartenmaterial erfolgen.

Bevorzugt wird die durch die erste und die zweite Detektionseinrichtung erfasste Fahrzeugumgebung in einer gemeinsamen Bilddarstellung, insbesondere in einem gemeinsamen einzigen Bild, auf einer Anzeigevorrichtung mehrfarbig angezeigt. Sowohl die Informationen der ersten Detektionseinrichtung als auch die der zweiten Detektionseinrichtung werden durch die zugrunde gelegte Bildverarbeitung so verarbeitet, dass ein gemeinsames Bild dargestellt wird, welches die Informationen beider Detektionseinrichtungen in einem Bild mehrfarbig anzeigt.

Besonders bevorzugt erweist sich das Verfahren dann, wenn die Fahrzeugumgebungsbereiche im Wesentlichen vom Fahrzeug aus nach vorne erstreckt sind und der erste Fahrzeugumgebungsbereich im Wesentlichen durch den mit Frontscheinwerfern des Fahrzeugs ausleuchtbaren Umgebungsbereich begrenzt wird. Dadurch kann der durch die Frontscheinwerfer ausgeleuchtete Umgebungsbereich mittels einer herkömmlichen Farbkamera, beispielsweise einer CCD-Kamera oder einer CMOS-Kamera, erfasst werden und die darin enthaltene Farbinformation ausgewertet werden.

Gerade bei Nachtfahrten kann somit sehr zuverlässig auf Objekte geschlossen werden und diese farbig angezeigt werden, welche nicht mehr in diesem von den Frontscheinwerfern ausgeleuchteten Umgebungsbereich vorhanden sind, sondern in dem sich darüber hinaus streckenden Teilbereich des zweiten Fahrzeugumgebungsbereichs befinden. Diese nicht mehr für den Fahrer erkennbaren Objekte werden dann zuverlässig detektiert und in einer mehrfarbigen Anzeige dargestellt. Bevorzugt werden Bildverarbeitungsalgorithmen verwendet, die es ermöglichen, aus Infrarotbildern, welche durch die zweite Detektionseinrichtung erzeugt werden, durch Fusion mit ein oder mehreren und auch verschiedensten Farb- und Objektinformationen Farbdarstellungen für die erfassten Objekte im Teilbereich zu generieren. Die so generierten Farb- und Objektinformationen erlauben es, dass in von Infrarotsensoren ausgeleuchteter Umgebung auch für bewegte Objekte, wie Kraftfahrzeuge ein Farbbild errechnet werden kann.

Das vorgeschlagene Verfahren kann jedoch auch für seitlich oder rückwärtig vom Fahrzeug befindliche Objekte durchgeführt werden.

Ein weiterer Aspekt der Erfindung betrifft ein Bilderfassungssystem, insbesondere ein Nachtsichtsystem, für ein Fahrzeug, welches zur Erfassung der Umgebung des Fahrzeugs ausgebildet ist. Insbesondere ist das Bilderfassungssystem zur Durchführung eines erfindungsgemäßen Verfahrens oder einer vorteilhaften Ausgestaltung davon ausgebildet.

Das Bilderfassungssystem umfasst in bevorzugter Weise zumindest eine erste Detektionseinrichtung, welche als Kamera zur Erfassung von Bildern im sichtbaren Spektralbereich ausgebildet ist. Das Bilderfassungssystem umfasst des Weiteren zumindest eine zweite Detektionseinrichtung, welche zumindest einen IR-Sensor aufweist.

Das Bilderfassungssystem umfasst bevorzugter Weise eine IR-Sensorik mit zumindest einem ersten IR-Sensor mit einer Sensitivität im Wellenlängenbereich zwischen 0,5 µm und 1,8 µm, insbesondere zwischen 0,7 µm und 1,5 µm. Darüber hinaus umfasst die IR-Sensorik zumindest einen zweiten IR-Sensor mit einer Sensitivität im Wellenlängenbereich zwischen 2,5 µm und 35 µm, insbesondere zwischen 3 µm und 30 µm. Vorzugsweise werden somit zumindest zwei Infrarot-Sensoren mit verschiedenen Wellenlängenbereichen eingesetzt. Der erste IR-Sensor ist somit zur Restlichtverstärkung und der zweite IR-Sensor zur Wärmebilderfassung eingesetzt. Zusätzlich kann vorgesehen sein, dass das Bilderfassungssystem auch einen IR-Scheinwerfer aufweist, welcher bevorzugt eine Sensitivität im Wellenlängenbereich zwischen 0,8 µm und 2,5 µm aufweist. Dadurch kann die Effizienz der Restlichtverstärkung und somit auch die Messung der Restlichtverstärkung erhöht werden.

Das Bilderfassungssystem ist des Weiteren bevorzugt zum Datenaustausch durch drahtlose Kommunikation mit weiteren Verkehrsteilnehmern, insbesondere weiteren Fahrzeugen, ausgebildet. So kann beispielsweise eine Car-to-Car-Kommunikation vorgesehen sein. Auch eine Car-to-Infrastructure-Kommunikation ist bevorzugt vorgesehen.

Ein Ausführungsbeispiel wird nachfolgend anhand schematischer Zeichnungen näher erläutert. Es zeigen.
- Fig. 1: eine schematische Darstellung eines Fahrzeugs mit einem aus dem Stand der Technik bekannten Bilderfassungssystems;
- Fig. 2: eine schematische Darstellung eines Fahrzeugs mit einem erfindungsgemäßen Bilderfassungssystems; und
- Fig. 3: eine schematische Blockbilddarstellung eines erfindungsgemäßen Bilderfassungssystems.

In den Figuren werden gleiche oder funktionsgleiche Elemente mit den gleichen Bezugszeichen versehen.

In Fig. 2 ist in schematischer Darstellung ein Fahrzeug 1 gezeigt, welches zwei Frontscheinwerfer 2 und 3 aufweist. Darüber hinaus umfasst das Fahrzeug 1 eine erste Detektionseinrichtung 4a, welche mit einer Sensitivität im sichtbaren Spektralbereich ausgebildet ist und zur Erfassung eines ersten Fahrzeugumgebungsbereichs ausgebildet ist. Im Ausführungsbeispiel ist dieser Erfassungsbereich der ersten Detektionseinrichtung 4a, welche insbesondere eine Farbkamera, beispielsweise eine CCD-Kamera oder eine CMOS-Kamera ist, im Wesentlichen gleich dem Bereich 5, welcher durch die Frontscheinwerfer 2 und 3 ausgeleuchtet werden kann. Diese erste Detektionseinrichtung 4a ist somit zur Erfassung und Auswertung der in diesem ersten Fahrzeugumgebungsbereich 5 detektierten Objekte sowie deren Farbinformationen ausgebildet.

Darüber hinaus umfasst das Fahrzeug 1 eine zweite Detektionseinrichtung 4b, welche eine Sensitivität im infraroten Spektralbereich aufweist. Die zweite Detektionseinrichtung 4b umfasst zumindest einen IR-Sensor, welche eine Sensitivität im Wellenlängenbereich zwischen 0,7 µm und 1,3 µm aufweist.

Darüber hinaus umfasst das Fahrzeug 1 eine weitere Detektionseinrichtung 4c, welche eine Sensitivität im infraroten Spektralbereich aufweist. Diese Detektionseinrichtung 4c umfasst zumindest einen IR-Sensor, welcher im thermischen Wellenlängenbereich zwischen 3 µm und 30 µm sensitiv ist. Die beiden Detektionseinrichtungen 4b und 4c sind zur Erfassung eines zweiten Fahrzeugumgebungsbereichs 6 ausgebildet, welcher sich ebenfalls in das Vorfeld des Fahrzeugs 1 erstreckt. Wie aus der Darstellung in Fig. 2 zu erkennen ist, weist der zweite Fahrzeugumgebungsbereich 6 eine größere Reichweite als der erste Fahrzeugumgebungsbereich 5 auf. Der erste Fahrzeugumgebungsbereich 5 ist im Wesentlichen vollständig in dem zweiten Fahrzeugumgebungsbereich 6 enthalten. Indem sich der zweite Fahrzeugumgebungsbereich 6 über den ersten Fahrzeugumgebungsbereich 5 hinaus erstreckt, wird ein Teilbereich 7 gebildet, welcher von der ersten Detektionseinrichtung 4a nicht erfasst werden kann.

Die von den beiden Detektionseinrichtungen 4b und 4c erfasste Umgebung und die darin enthaltenen Objekte können ausschließlich nicht farbig beziehungsweise einfarbig erfasst werden. Um nun auch diese Objekte mehrfarbig darstellen zu können, umfasst das Fahrzeug 1 ein erfindungsgemäßes Bilderfassungssystem 8, welchem neben den Detektionseinrichtungen 4a bis 4c eine Steuer- und Auswerteelektronik 9 zugeordnet ist. Diese ist mit den Detektionseinrichtungen 4a und 4c elektrisch verbunden und weist darüber hinaus auch eine elektrische Verbindung zu einer Anzeigevorrichtung 10 auf.

Diese Anzeigevorrichtung 10 kann beispielsweise ein Bildschirm im Fahrzeug sein. Es können jedoch auch andere Anzeigevorrichtungen wie beispielsweise Head-up-Displays, vorgesehen sein.

Durch das Bilderfassungssystem 8 wird ermöglicht, dass die durch die Detektionseinrichtungen 4b und 4c erfasste Fahrzeugumgebung 6 und insbesondere der Teilbereich 8 und die darin erfassten Objekte auf der Anzeigevorrichtung 10 realitätsnah bevorzugt sogar nahezu oder vollständig in einer Echtfarbdarstellung angezeigt werden.

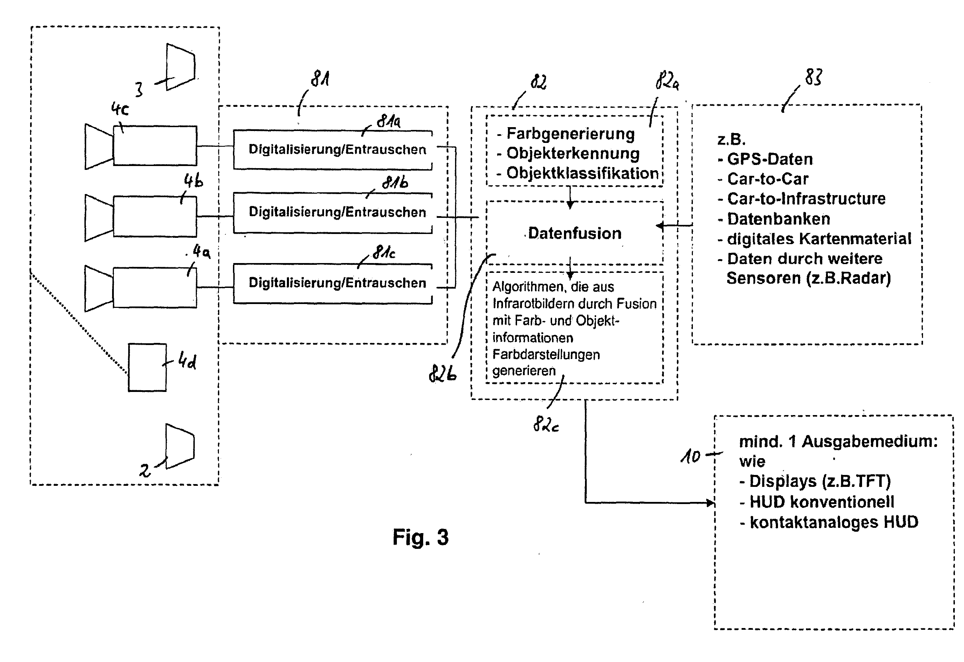

Die Objekterfassung in den Fahrzeugumgebungsbereichen 5 und 6 durch die entsprechenden Detektionseinrichtungen 4a bis 4c beziehungsweise gegebenenfalls auch durch die Detektionseinrichtung 4d (Fig. 3), wird gleichzeitig durchgeführt.

Die Ausgestaltung des erfindungsgemäßen Bilderfassungssystems 8 wird anhand der schematischen Darstellung in Fig. 3 näher erläutert. In dieser Fig. 3 ist beispielhaft eine weitere Detektionseinrichtung 4b dargestellt, welche ein Infrarot-Scheinwerfer sein kann. Dieser weist im Ausführungsbeispiel eine Sensitivität im infraroten Spektralbereich zwischen 0,8 µm und 2,5 µm auf.

Die von den Detektionseinrichtungen 4a bis 4c erfassten Informationen werden an eine Bildaufbereitungseinheit 81 übertragen. Dort wird eine Digitalisierung und ein Entrauschen in den jeweiligen Einheiten 81a, 81b und 81c durchgeführt. Die durch diese Einheiten 81a bis 81c erzeugten Informationen werden dann an eine Bilderzeugungseinheit 82 übertragen.

In der Bilderzeugungseinheit 82 werden die durch die Detektionseinrichtungen 4a bis 4d erfassten Objekte in den jeweiligen Fahrzeugumgebungsbereichen 5 und 6 in Objektklassen kategorisiert. Dabei kann zunächst eine Objekterkennung durchgeführt werden, indem beispielsweise ein Vergleich mit abgespeicherten Referenzobjekten durchgeführt wird. Wird eine Übereinstimmung oder eine zumindest sehr ähnliche Objektübereinstimmung erkannt, kann eine entsprechende Klassifizierung durchgeführt werden. Dies erfolgt in der Teileinheit 82a. Im Weiteren werden diese Informationen dann an eine Teileinheit 82b der Bilderzeugungseinheit 82 bereitgestellt, in welcher eine Datenfusion durchgeführt wird. Dazu werden unter anderem Farbinformationen von Objekten aus dem ersten Fahrzeugumgebungsbereich 5 in den durch zumindest die Detektionseinrichtung 4b und 4c erfassten zweiten Fahrzeugumgebungsbereich 6 extrapoliert. Die Datenfusion in der Teileinheit 82b kann darüber hinaus auch unter Berücksichtigung von in einer Einheit 83 abgelegten oder empfangenen Zusatzdaten erfolgen. Beispielsweise können dabei GPS-Daten, Car-to-Car-Daten, Car-to-Infrastructure-Daten, weitere Datenbankinformationen im Hinblick auf Farbechtheit, Informationen aus digitalen Karten und/oder Daten durch weitere Sensoren, beispielsweise Radarsensoren oder Ultraschallsensoren, berücksichtigt werden.

In einer weiteren Teileinheit 82c der Bilderzeugungseinheit 82 wird dann unter Berücksichtigung dieser Informationen mit Bildbearbeitungsalgorithmen aus den Infrarotbildern der Detektionseinrichtungen 4b und 4c und gegebenenfalls auch aus der Detektionseinrichtung 4b, durch Fusion mit Farb- und Objektinformationen Farbdarstellungen der in einem Teilbereich 7 erfassten Objekte generiert. Dadurch kann somit auch eine mehrfarbige Darstellung des erfassten Teilbereichs 7 beziehungsweise der in diesem Teilbereich 7 erfassten Objekte erfolgen. Insbesondere die Einheiten 81 und 82 können in der Steuer- und Auswerteelektronik 9 enthalten sein.

Auf der Anzeigevorrichtung 10 wird dann ein gemeinsames Bild dargestellt, welches sowohl den ersten als auch den zweiten Fahrzeugumgebungsbereich 5 beziehungsweise 6 und somit auch den Teilbereich 7 mehrfarbig darstellt.

## Patentansprüche

1. Verfahren zur bildhaften Darstellung einer Fahrzeugumgebung, bei welchem mit einer im sichtbaren Spektralbereich sensitiven ersten Detektionseinrichtung (4a) ein erster Fahrzeugumgebungsbereich (5) erfasst und mehrfarbig dargestellt wird, und ein zweiter Fahrzeugumgebungsbereich (6) mit einer im infraroten Spektralbereich sensitiven zweiten Detektionseinrichtung (4b, 4c, 4d) erfasst wird,
**dadurch gekennzeichnet, dass**
sich der zweite Fahrzeugumgebungsbereich (6) bereichsweise mit dem ersten Fahrzeugumgebungsbereich (5) überlappt und sich in zumindest einem Teilbereich (8) über die Reichweite des ersten Fahrzeugumgebungsbereichs (5) hinaus erstreckt, und die in dem Teilbereich (8) durch die zweite Detektionseinrichtung (4b, 4c, 4d) mittels Infrarotbilder erfasste Fahrzeugumgebung mehrfarbig angezeigt wird.

2. Verfahren nach Anspruch 1,
**dadurch gekennzeichnet, dass**
aus Farbinformationen von gespeicherten und/oder detektierten Referenzdaten Farbinformationen für die in dem Teilbereich (8) mittels Infrarotbildern detektierten Objekte erzeugt werden.

3. Verfahren nach Anspruch 1 oder 2,
**dadurch gekennzeichnet, dass**
zumindest in dem Teilbereich (8) erfasste Objekte mit abgespeicherten Referenzobjekten verglichen und vorgegebenen Objektklassen zugeordnet werden.

4. Verfahren nach Anspruch 3,
**dadurch gekennzeichnet, dass**
Farbinformationen einer Objektklasse auf ein klassifiziertes Objekt des Teilbereichs (8) übertragen werden.

5. Verfahren nach einem der vorhergehenden Ansprüche,
**dadurch gekennzeichnet, dass**
Farbinformationen eines spezifischen Referenzobjekts auf ein im Teilbereich (8) mittels Infrarotbildern erfasstes Objekt im Falle einer Objektübereinstimmung übertragen werden.

6. Verfahren nach einem der vorhergehenden Ansprüche,
**dadurch gekennzeichnet, dass**
aus Farbinformationen von in dem ersten Fahrzeugumgebungsbereich (5) mehrfarbig erfassten Objekten auf Farbgebungen von in dem Teilbereich (8) erfassten Objekten extrapoliert wird.

7. Verfahren nach einem der vorhergehenden Ansprüche,
**dadurch gekennzeichnet, dass**
in dem ersten Fahrzeugumgebungsbereich (5) erfasste Objekte mit in dem Teilbereich (8) erfassten Objekten verglichen werden und bei einer Objektübereinstimmung Farbinformationen entsprechend auf die Objekte des Teilbereichs (8) übertragen werden.

8. Verfahren nach einem der vorhergehenden Ansprüche,
**dadurch gekennzeichnet, dass**
zur Erzeugung von Farbinformationen für Objekte in der Fahrzeugumgebung, insbesondere in dem Teilbereich (8), Informationen eines Satelliten-Navigationssystems und/oder Informationen von digitalen Landkarten berücksichtigt werden.

9. Verfahren nach einem der vorhergehenden Ansprüche,
**dadurch gekennzeichnet, dass**
zur Erzeugung von Farbinformationen für ein Objekt in der Fahrzeugumgebung, insbesondere in dem Teilbereich (8), von diesem Objekt gesendete und dieses Objekt spezifizierende Informationen berücksichtigt werden.

10. Verfahren nach einem der vorhergehenden Ansprüche,
**dadurch gekennzeichnet**, das
Farbinformationen für die Fahrzeugumgebung im Teilbereich (8) durch statistische Modelle generiert werden.

11. Verfahren nach einem der vorhergehenden Ansprüche,
**dadurch gekennzeichnet, dass**
zum Abgleich der Farbechtheit bei der Darstellung der Farbinformationen für die Fahrzeugumgebung im Teilbereich (8) abgespeicherte Referenzfarbwerte herangezogen werden.

12. Verfahren nach einem der vorhergehenden Ansprüche,
**dadurch gekennzeichnet, dass**
die durch die erste und die zweite Detektionseinrichtung (4b, 4c, 4d) erfasste Fahrzeugumgebung in einer gemeinsamen Bilddarstellung auf einer Anzeigevorrichtung (10) angezeigt wird.

13. Verfahren nach einem der vorhergehenden Ansprüche,
**dadurch gekennzeichnet, dass**
sich die Fahrzeugumgebungsbereiche (5, 6, 8) im Wesentlichen vom Fahrzeug (1) aus nach vorne erstrecken und der erste Fahrzeugumgebungsbereich (5) im Wesentlichen durch den mit Frontscheinwerfern (2, 3) des Fahrzeugs (1) ausleuchtbaren Umgebungsbereich begrenzt wird.

14. Bilderfassungssystem, insbesondere Nachtsichtsystem, für eine Umgebung eines Fahrzeugs, welche zum Durchführen eines Verfahrens nach einem der vorhergehenden Ansprüche ausgebildet ist

15. Bilderfassungssystem nach Anspruch 14, welches als erste Detektionseinrichtung (4a) eine Kamera und als zweite Detektionseinrichtung (4b, 4c, 4d) zumindest einen IR-Sensor aufweist.

16. Bilderfassungssystem nach Anspruch 14 oder 15, welches eine IR-Sensorik (4b, 4c, 4d) mit zumindest einem ersten IR-Sensor mit einer Sensitivität im Wellenlängenbereich zwischen 0,5 µm und 1,8 µm, insbesondere zwischen 0,7 µm und 1,5 µm, und zumindest einem zweiten IR-Sensor mit einer Sensitivität im Wellenlängenbereich zwischen 2,5 µm und 35 µm, insbesondere zwischen 3 µm und 30 µm, aufweist.

17. Bilderfassungssystem nach einem der Ansprüche 14 bis 16, welches zum Datenaustausch durch drahtlose Kommunikation mit weiteren Verkehrsteilnehmern, insbesondere Fahrzeugen, ausgebildet ist, welche Daten zur Bestimmung der Farbgebung von Objekten im Teilbereich (8) berücksichtigbar sind.
